# EUROPEAN PATENT APPLICATION

(11) **EP 4 742 232 A1**
(43) Date of publication of application: **13.05.2026**
(21) Application number: 23944307.0
(22) Date of filing: 04.07.2023
(51) Int. Cl.: G09G 5/00, G09G 5/37, G09G 5/377

(54) **PROGRAMMABLE DISPLAY APPARATUS, SCREEN SYNCHRONIZATION SYSTEM, AND SCREEN SYNCHRONIZATION METHOD**

(71) Applicant: Schneider Electric Japan Holdings Ltd., Tokyo 108-0023 (JP)
(72) Inventor: TSUJIOKA, Masayuki, Osaka-shi, Osaka 541-0041 (JP); KANEHIRA FUKUI, Saeko, Osaka-shi, Osaka 541-0041 (JP)
(74) Representative: Lavoix
(86) International application number: PCT/JP2023/024752
(87) International publication number: WO 2025/009055

(57) **Abstract**

A programmable display (1) includes a display section (10) and a control device. In a case where the control device permits connections of remote apparatuses (2A, 2B) in a synchronous mode and permits a connection of a remote apparatus (2C) in an asynchronous mode, the control device prohibits an operation on an identical-content region of a screen displayed on each of remaining apparatuses which are not an operated apparatus whose screen is being operated among the programmable display (1) and the remote apparatuses (2A through 2C), the identical-content region having content identical with that of the screen displayed on the operated apparatus.

## Description

### Technical Field

The present invention relates to a programmable display, a screen synchronization system, and a screen synchronization method.

### Background Art

Patent Literature 1 discloses a control system that includes a programmable logic controller (PLC), a management device, and a plurality of human machine interface (HMI) devices. The management device acquires necessary data from the PLC and prepares screen data for the plurality of HMI devices to prepare operation monitoring screens. The control system has a non-occupation mode in which any of the plurality of HMI devices can receive a user operation and an occupation mode in which only a specific HMI device can receive a user operation.

In a case where a user carries out an occupation operation on any of the plurality of HMI devices, an operation is received only on the HMI device on which the occupation operation has been carried out. The management device has a function of, in the occupation mode, disabling a user operation on an HMI device other than the HMI device on which the occupation operation has been carried out.

### Citation List

### [Patent Literature]

[Patent Literature 1]
Japanese Patent Application Publication Tokukai No. 2014-085782

### Summary of Invention

### Technical Problem

In the control system disclosed in Patent Literature 1, it is not assumed that user operations on identical-content regions of screens, which have identical content between the management device and the plurality of HMI devices, are enabled or disabled. An object of an aspect of the present invention is to prevent, among a programmable display and a plurality of remote apparatuses, simultaneous operations on identical-content regions of screens respectively including identical-content regions having identical content.

### Solution to Problem

In order to attain the object, a programmable display in accordance with an aspect of the present invention is connectable to a plurality of remote apparatuses including a first remote apparatus and a second remote apparatus, the programmable display including: a display section that displays a screen; and a control device that permits, for each of the plurality of remote apparatuses, a connection in a synchronous mode or a connection in an asynchronous mode, the synchronous mode being a mode in which at least one of the plurality of remote apparatuses displays a synchronous screen which is at least partially synchronized with a display screen displayed on the display section, the asynchronous mode being a mode in which at least one of the plurality of remote apparatuses is permitted to display a screen different from the synchronous screen, and in a first case in which a connection of the first remote apparatus in the synchronous mode is permitted and a connection of the second remote apparatus in the asynchronous mode is permitted, and in a state in which the second remote apparatus displays a screen including content that is at least partially identical with that of the display screen, the control device prohibiting an operation on an identical-content region of a screen displayed on each of first remaining apparatuses which are not a first operated apparatus whose screen is being operated among the programmable display, the first remote apparatus, and the second remote apparatus, the identical-content region having content identical with that of the screen displayed on the first operated apparatus.

A screen synchronization method in accordance with an aspect of the present invention is a method for synchronizing screens using a programmable display that is connectable to a plurality of remote apparatuses including a first remote apparatus and a second remote apparatus, the screen synchronization method including: a display step of displaying a screen on a display section of the programmable display; and a connection step of permitting, for each of the plurality of remote apparatuses, a connection in a synchronous mode or a connection in an asynchronous mode, the synchronous mode being a mode in which at least one of the plurality of remote apparatuses displays a synchronous screen which is at least partially synchronized with a display screen displayed on the display section, the asynchronous mode being a mode in which at least one of the plurality of remote apparatuses is permitted to display a screen different from the synchronous screen, and the screen synchronization method further including a prohibition step of, in a case in which a connection of the first remote apparatus in the synchronous mode is permitted and a connection of the second remote apparatus in the asynchronous mode is permitted, and in a state in which the second remote apparatus displays a screen including content that is at least partially identical with that of the display screen, prohibiting an operation on an identical-content region of a screen displayed on each of remaining apparatuses which are not an operated apparatus whose screen is being operated among the programmable display, the first remote apparatus, and the second remote apparatus, the identical-content region having content identical with that of the screen displayed on the operated apparatus.

### Advantageous Effects of Invention

According to an aspect of the present invention, it is possible to prevent, among a programmable display and a plurality of remote apparatuses, simultaneous operations on identical-content regions of screens which respectively include the identical-content regions having identical content.

### Brief Description of Drawings

Fig. 1 is a block diagram illustrating an example of a configuration of a screen synchronization system, a PLC, and a device, in accordance with an embodiment of the present invention.
Fig. 2 is a diagram illustrating an example of a state in which, in the screen synchronization system illustrated in Fig. 1, communication is carried out between a programmable display and remote apparatuses.
Fig. 3 is a diagram illustrating another example of a state in which, in the screen synchronization system illustrated in Fig. 1, communication is carried out between a programmable display and remote apparatuses.
Fig. 4 is a diagram illustrating a transition of states of remote apparatuses in the screen synchronization system illustrated in Fig. 2.
Fig. 5 is a diagram for explaining prohibition of an operation on an identical-content region in a screen in the screen synchronization system illustrated in Fig. 1.
Fig. 6 illustrates a flow of a process in which a control device included in the programmable display illustrated in Fig. 1 permits an operation on a screen displayed on a remote apparatus.
Fig. 7 is a timing chart illustrating a process in which the control device included in the programmable display illustrated in Fig. 1 permits or prohibits an operation on a screen displayed on a remote apparatus.
Fig. 8 is a flowchart illustrating a process in which the control device included in the programmable display or a control device included in a remote apparatus illustrated in Fig. 1 causes an image of identification information and an image of operation to overlap with a screen.

### Description of Embodiments

### (Screen synchronization system 100)

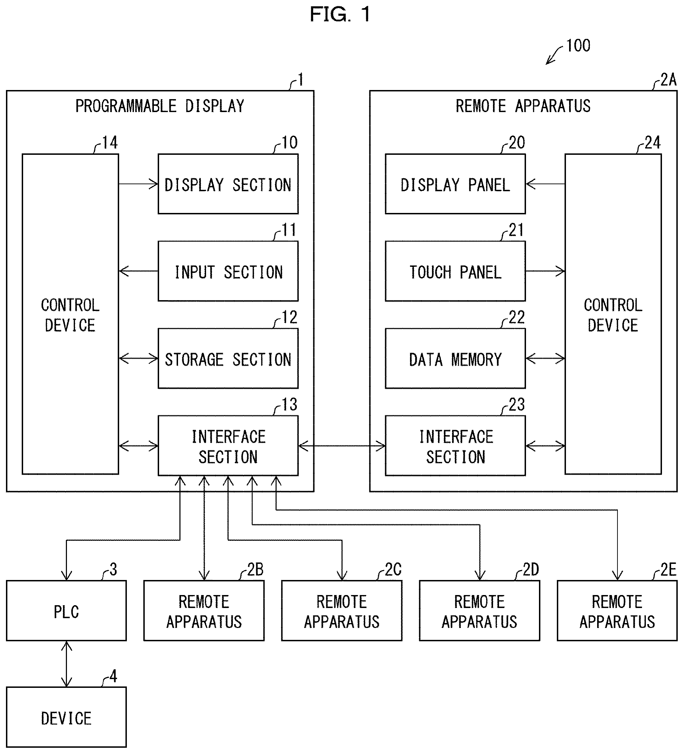

Fig. 1 is a block diagram illustrating an example of a configuration of a screen synchronization system 100, a PLC 3, and a device 4, in accordance with an embodiment of the present invention. The following description is mainly for the screen synchronization system 100, and is also supposed to be a description of a screen synchronization method in which screens are synchronized using a programmable display 1.

As illustrated in Fig. 1, the screen synchronization system 100 includes a programmable display 1, and a plurality of remote apparatuses 2A, 2B, 2C, 2D, and 2E. The screen synchronization system 100 may further include another remote apparatus, in addition to the remote apparatuses 2A through 2E. The screen synchronization system 100 is a system in which a screen that is displayed on each of the plurality of remote apparatuses 2A through 2E can be at least partially synchronized with a display screen that is displayed on the programmable display 1.

### (Programmable display 1)

The programmable display 1 includes a display section 10, an input section 11, a storage section 12, an interface section 13, and a control device 14. The programmable display 1 is connectable to a plurality of remote apparatuses including the remote apparatuses 2A through 2E and to the PLC 3. The programmable display 1 is connected to the PLC 3 via a communication cable and thus communicates with the PLC 3. The programmable display 1 communicates with the remote apparatuses 2A through 2E via wireless communications.

The programmable display 1 is a dedicated computer that displays a screen for an operation and display to realize an operation function and a display function peculiar to the programmable display, and is used as an HMI apparatus. The programmable display 1 functions as a server.

The display section 10 displays a display screen for an operation and display of the device 4 or a display screen indicating a state of the device 4 (display step). The input section 11 is, for example, a touch panel that receives input of a touch operation by a user and that is provided to overlap with the display section 10.

The storage section 12 stores a screen file that defines a display screen displayed on the display section 10. The screen file is in a file format called a project that includes a plurality of screens each including at least one object. The interface section 13 is a communication section for the programmable display 1 to communicate with the plurality of remote apparatuses including the remote apparatuses 2A through 2E and with the PLC 3.

The control device 14 carries out an operation of displaying a state of the device 4 connected to the PLC 3 and an operation of controlling the state of the device 4 in response to an operation on the input section 11. The control device 14 permits, for each of the plurality of remote apparatuses including the remote apparatuses 2A through 2E, a connection in the synchronous mode or a connection in the asynchronous mode (connection step).

The synchronous mode is a mode in which a remote apparatus displays a synchronous screen which is at least partially synchronized with a display screen displayed on the display section 10, and the asynchronous mode is a mode in which a remote apparatus is permitted to display a screen different from the synchronous screen. "Synchronization" means that, for a plurality of screens that are synchronized with each other, identical content is included, and the content changes at substantially the same timing. Note that, in a case where a time lag occurs, in relation to communication speeds, for timings at which content changes, such a case is also included in "synchronization". The synchronous mode may be a mode in which only the synchronous screen is displayed on the remote apparatus.

The PLC 3 is a control device that reads a state of the device 4 or gives a control instruction to the device 4 at each predetermined scan time, in accordance with a sequence program prepared by the user. The device 4 can include, for example, an input apparatus such as a sensor or switch, and an output apparatus such as an actuator, a relay, a solenoid valve, or a display.

### (Remote apparatus 2A through 2E)

The remote apparatus 2A is a terminal device that is communicably connectable to the programmable display 1. The remote apparatus 2A is a terminal device capable of carrying out an operation of displaying a state of the device 4 via the programmable display 1 and an operation of controlling the state of the device 4 in response to an operation on a touch panel 21, when the screen displayed on the remote apparatus 2A is operated.

The plurality of remote apparatuses including the remote apparatuses 2A through 2E can be connected to the programmable display 1 so that a plurality of users use respective remote apparatuses to remotely operate the device 4 to be controlled or to monitor a state of the device 4 to be controlled. An apparatus that constitutes the remote apparatus 2A is suitably a portable apparatus such as a tablet device. Alternatively, the remote apparatus 2A may be an apparatus such as a personal computer.

The remote apparatus 2A includes a display panel 20, a touch panel 21, a data memory 22, an interface section 23, and a control device 24. The display panel 20 is a display section capable of displaying a synchronous screen which is at least partially synchronized with a display screen displayed on the display section 10 of the programmable display 1. The display panel 20 can also display a screen different from the synchronous screen.

The touch panel 21 is an input section that receives input of a touch operation by the user and is provided so as to overlap with the display panel 20. The data memory 22 stores content of processing by the control device 24. The interface section 23 is a communication section for the remote apparatus 2A to communicate with the programmable display 1. The control device 24 controls each section of the remote apparatus 2A.

The remote apparatus 2A may include, for example, a mouse and a keyboard in place of the touch panel 21 as an input section. In this case, the mouse and the keyboard receive input of an operation by the user. The remote apparatuses 2B through 2E each have the same configuration as the remote apparatus 2A. That is, similarly to the remote apparatus 2A, the remote apparatuses 2B through 2E each include a display panel 20, a touch panel 21, a data memory 22, an interface section 23, and a control device 24.

### (Communication between programmable display 1 and remote apparatuses 2A through 2E)

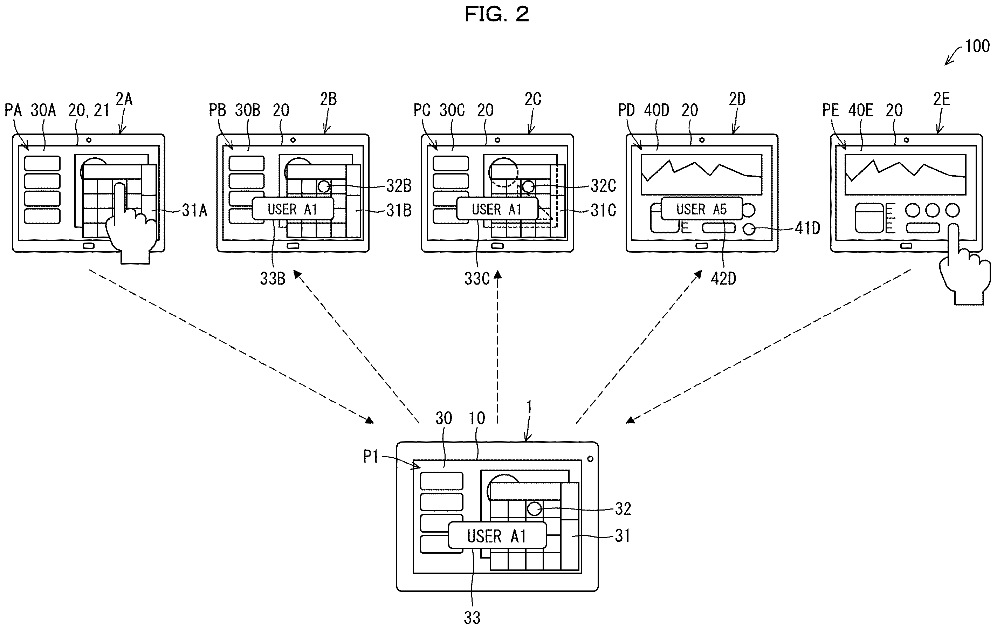

Fig. 2 is a diagram illustrating an example of a state in which, in the screen synchronization system 100 illustrated in Fig. 1, communication is carried out between the programmable display 1 and the remote apparatuses 2A through 2E. Hereinafter, it is assumed that the control device 14 of the programmable display 1 permits connections of the remote apparatuses 2A and 2B in the synchronous mode and permits connections of the remote apparatuses 2C through 2E in the asynchronous mode. In Fig. 2, a case is described in which an apparatus whose screen is mainly operated is the remote apparatus 2A that is connected to the programmable display 1 in the synchronous mode.

A screen displayed on each of the remote apparatuses 2A and 2B connected to the programmable display 1 in the synchronous mode makes a transition in accordance with a transition of the display screen displayed on the programmable display 1. The remote apparatuses 2C through 2E connected to the programmable display 1 in the asynchronous mode each maintain display of a currently displayed screen regardless of the transition of the display screen displayed on the programmable display 1, unless the user carries out any operation.

### (Display status of screen of each apparatus)

As illustrated in Fig. 2, the display section 10 of the programmable display 1 displays a screen P1 which is an example of a display screen. The screen P1 has regions 30, 31, 32, and 33. The screen P1 is a screen that defines a composite image composed of a plurality of layer images which overlap with each other. Similarly, screens PA, PB, PC, and PD which will be described later are each a screen that defines a composite image composed of a plurality of layer images which overlap with each other. The regions 30 through 33 overlap with each other, and the regions 30 through 33 are each a region that defines a layer image.

The region 30 is a region that defines an image which displays an object for operating the device 4 and an object indicating a state of the device 4. The region 31 defines an image of an input key for inputting a numerical value by input of a touch operation by the user to the input section 11. The region 31 overlaps with the region 30 and defines an image of pop-up display that appears through a touch operation by the user in a state in which the region 30 is displayed. The regions 32 and 33 will be described later.

The display panel 20 of the remote apparatus 2A displays a screen PA. The screen PA has regions 30A and 31A. The regions 30A and 31A overlap with each other, and the regions 30A and 31A are each a region that defines a layer image. The screen PA is a synchronous screen that is at least partially synchronized with the screen P1 displayed on the programmable display 1. A screen PB described later is also the synchronous screen. The region 30A is a region that is synchronized with the region 30 included in the screen P1, and the region 31A is a region that is synchronized with the region 31 included in the screen P1.

The display panel 20 of the remote apparatus 2B displays a screen PB. The screen PB has regions 30B, 31B, 32B, and 33B. The regions 30B through 33B overlap with each other, and the regions 30B through 33B are each a region that defines a layer image. The region 30B is a region synchronized with the region 30 included in the screen P1, and the region 31B is a region synchronized with the region 31 included in the screen P1. The regions 32B and 33B will be described later.

The display panel 20 of the remote apparatus 2C displays a screen PC. The screen PC has regions 30C, 31C, 32C, and 33C. The regions 30C through 33C overlap with each other, and the regions 30C through 33C are each a region that defines a layer image. The region 30C has content identical with that of the region 30 included in the screen P1, and the region 31C has content identical with that of the region 31 included in the screen P1. The regions 32C and 33C will be described later.

The display panel 20 of the remote apparatus 2D displays a screen PD. The screen PD has regions 40D, 41D, and 42D. The regions 40D through 42D overlap with each other, and the regions 40D through 42D are each a region that defines a layer image. The screen PD is a screen different from the above-described synchronous screen. The region 40D is a region that defines an image which displays an object for operating the device 4 and an object indicating a state of the device 4. The regions 41D and 42D will be described later.

The display panel 20 of the remote apparatus 2E displays a screen PE. The screen PE has a region 40E. The screen PE is a screen including content that is at least partially identical with that of the screen PD displayed on the display panel 20 of the remote apparatus 2D. The region 40E has content identical with that of the region 40D included in the screen PD.

### (Communication in case where touch operation is carried out)

In a case where a user A1 of the remote apparatus 2A has carried out a touch operation on the touch panel 21 of the remote apparatus 2A, the control device 24 of the remote apparatus 2A transmits operation request data to the programmable display 1. An example of content of the operation request data is as in Table 1 below. Table 1 indicates item names, data types, and numerical ranges.

**[Table 1]**

| Item name | Data type | Range |
|---|---|---|
| Operation type | Numerical value | 0: Touch OFF |
| | | 1: Touch ON |
| | | 2: Touch MOVE |
| X coordinate | Numerical value | -32768.0 to 32767.0 |
| Y coordinate | Numerical value | -32768.0 to 32767.0 |
| Latitude in location information | Numerical value | |
| Longitude in location information | Numerical value | |
| Touch identification ID | Numerical value | 0 to 4294967295 |

In Table 1, the operation type indicates a type of a touch operation. The X coordinate is a coordinate position of a touch operation in an X direction defined in a screen. The X direction is the horizontal direction of the screen. The Y coordinate is a coordinate position of a touch operation in a Y direction defined in the screen. The Y direction is the vertical direction of the screen. The X and Y directions are orthogonal to each other.

The latitude in location information is a latitude in location information of an operated apparatus whose screen is being operated. Hereinafter, among the programmable display 1 and the remote apparatuses 2A through 2E, an apparatus whose screen is being operated is referred to as an operated apparatus, and apparatuses other than the operated apparatus are each referred to as a remaining apparatus. The longitude in location information is a longitude in location information of the operated apparatus. The touch identification ID is an ID that is assigned for each touch operation to identify the touch operation. The data type of operation request data indicated in Table 1 is a numerical value. The latitude and longitude in the location information of the operated apparatus are acquired by the operated apparatus. The remaining apparatuses other than the operated apparatus may each convert, into an address, the latitude and longitude in the location information received from the operated apparatus.

The control device 14 of the programmable display 1 receives operation request data from the remote apparatus 2A. Upon receipt of the operation request data, the control device 14 prepares operation information which indicates content pertaining to an operation on the screen PA displayed on the remote apparatus 2A. An example of the content of the operation information is as in Table 2 below. Table 2 indicates item names, data types, and numerical ranges.

**[Table 2]**

| Item name | Data type | Range |
|---|---|---|
| Terminal identifier | Character string | |
| User name | Character string | |
| Screen distribution mode | Numerical value | 0: Synchronous |
| | | 1: Non-synchronous |
| Latitude in location information | Numerical value | |
| Longitude in location information | Numerical value | |
| | | 0: Touch/panning end |
| | | 1: Touch start |
| | | 2: Touch MOVE |
| | | 3: Panning start |
| | | 4: Panning MOVE |
| | | 5: Click |
| Operation type | Numerical value | 6: Double-click |
| | | 7: Tap |
| | | 8: Double-tap |
| | | 9: Right click |
| | | 10: Long tap |
| | | 11: Flick |
| | | 12: Swipe operation |
| | | 13: Pinch operation |
| Start point X coordinate | Numerical value | -32768.0 to 32767.0 |
| Start point Y coordinate | Numerical value | -32768.0 to 32767.0 |
| Moving speed in X direction | Numerical value | -32768.0 to 32767.0 |
| Moving speed in Y direction | Numerical value | -32768.0 to 32767.0 |
| Pinch movement amount | Numerical value | -32768.0 to 32767.0 |
| Amount of change in magnification | Numerical value | 0.0 to 32767.0 |
| Touch identification ID | Numerical value | 0 to 4294967295 |

In Table 2, the terminal identifier is identification information for uniquely identifying an operated apparatus. The user name is a user name of a user of the operated apparatus and is registered in a screen file that is stored in the storage section 12. The data type of the terminal identifier and the user name is a character string. The screen distribution mode is a distribution mode of a screen of the operated apparatus. In a case where the operated apparatus is any of the remote apparatuses 2A through 2E, the screen distribution mode indicates one of the synchronous mode and the asynchronous mode in which the remote apparatus is connected to the programmable display 1. In a case where the operated apparatus is the programmable display 1, the screen distribution mode indicates the synchronous mode.

In the X direction, in a case where the operation type in Table 2 is any of 0 through 12, the start point X coordinate indicates a coordinate position at the time of operation. In a case where the operation type in Table 2 is 13, the start point X coordinate indicates a coordinate position at the start time of operation. In the Y direction, in a case where the operation type in Table 2 is any of 0 through 12, the start point Y coordinate indicates a coordinate position at the time of operation. In a case where the operation type in Table 2 is 13, the start point Y coordinate indicates a coordinate position at the start time of operation.

The moving speed in the X direction indicates a flick speed in the X direction in a case where the operation type in Table 2 is 11, and indicates 0 in a case where the operation type in Table 2 is not 11. The moving speed in the Y direction indicates a flick speed in the Y direction in a case where the operation type in Table 2 is 11, and indicates 0 in a case where the operation type in Table 2 is not 11.

In a case where the operation type in Table 2 is 13, the pinch movement amount is an amount of change in distance between two touched points. In a case where the operation type in Table 2 is not 13, the pinch movement amount is 0. In a case where the operation type in Table 2 is 13, the amount of change in magnification is a ratio of a scale magnification of a screen by a previous pinch operation and a scale magnification of a screen by a current pinch operation. In a case where the operation type in Table 2 is not 13, the amount of change in magnification is 0.

In a case where the operation type in Table 2 is 0 to 4, the touch identification ID is identification information for identifying touches at two or more points. In a case where the operation type in Table 2 is 5 to 13, the touch identification ID is 0. In the operation information indicated in Table 2, the data type of operation information other than the terminal identifier and the user name is a numerical value.

The control device 14 causes the screen P1 to display the prepared operation information. Specifically, the control device 14 prepares an image on the basis of the operation information, and causes the screen P1 to display the image. Thus, regions 32 and 33 are added to the screen P1 having regions 30 and 31, and consequently the screen P1 has the regions 30 through 33.

The region 32 defines an image indicating a part of the screen P1 that corresponds to a touch point on the screen PA by the user A1. The region 33 defines an image that identifies the user A1 of the remote apparatus 2A which is the operated apparatus among the programmable display 1 and the remote apparatuses 2A through 2C which display respective screens having at least partially identical content.

The control device 14 causes the operation information to be displayed on the screens PB and PC that are displayed on remaining apparatuses which are not the operated apparatus among the remote apparatuses 2A through 2C each displaying a screen including content that is at least partially identical with that of the screen P1. Specifically, the control device 14 transmits the operation information to the remote apparatuses 2B and 2C. After the control device 14 transmits the operation information to the remote apparatuses 2B and 2C, the control device 24 of the remote apparatus 2B receives the operation information from the control device 14, prepares an image on the basis of the received operation information, and causes the screen PB to display the image.

Thus, regions 32B and 33B are added to the screen PB having regions 30B and 31B, and consequently the screen PB has the regions 30B through 33B. The region 32B defines an image indicating a part of the screen PB that corresponds to a touch point on the screen PA by the user A1. The region 33B defines an image that identifies the user A1 of the remote apparatus 2A which is the operated apparatus.

Similarly, the control device 24 of the remote apparatus 2C receives the operation information from the control device 14, prepares an image on the basis of the received operation information, and causes the screen PC to display the image. Thus, regions 32C and 33C are added to the screen PC having regions 30C and 31C, and consequently the screen PC has the regions 30C through 33C. The region 32C defines an image indicating a part of the screen PC that corresponds to a touch point on the screen PA by the user A1. The region 33C defines an image that identifies the user A1 of the remote apparatus 2A which is the operated apparatus.

### (Case where user A5 of remote apparatus 2E carries out touch operation on remote apparatus 2E)

In a case where a user A5 of the remote apparatus 2E has carried out a touch operation on the touch panel 21 of the remote apparatus 2E, the control device 24 of the remote apparatus 2E transmits operation request data to the programmable display 1. The control device 14 of the programmable display 1 receives operation request data from the remote apparatus 2E. Upon receipt of the operation request data, the control device 14 prepares operation information which indicates content pertaining to an operation on the screen PE displayed on the remote apparatus 2E.

The control device 14 causes the operation information to be displayed on the screen PD that displays a screen including content that is at least partially identical with that of the screen PE. Specifically, the control device 14 transmits the operation information to the remote apparatus 2D. After the control device 14 transmits the operation information to the remote apparatus 2D, the control device 24 of the remote apparatus 2D receives the operation information from the control device 14, prepares an image on the basis of the received operation information, and causes the screen PD to display the image.

Thus, regions 41D and 42D are added to the screen PD having a region 40D, and consequently the screen PD has the regions 40D through 42D. The region 41D defines an image indicating a part of the screen PD that corresponds to a touch point on the screen PE by the user A5. The region 42D defines an image that identifies the user A5 of the remote apparatus 2E which is the operated apparatus among the remote apparatuses 2D and 2E which display respective screens having at least partially identical content.

From the details described above for Fig. 2, the following configuration is derived. The remote apparatuses 2A and 2B are defined as a first remote apparatus, and the remote apparatuses 2C through 2E are defined as a second remote apparatus. A case in which the control device 14 permits a connection of the first remote apparatus in the synchronous mode and permits a connection of the second remote apparatus in the asynchronous mode is defined as a first case. Furthermore, among the programmable display 1, the first remote apparatus, and the second remote apparatus, an apparatus whose screen is being operated is defined as a first operated apparatus, and apparatuses other than the first operated apparatus are defined as first remaining apparatuses.

In the first case, in a state in which the second remote apparatus displays a screen including content that is at least partially identical with that of a display screen displayed on the display section 10, the control device 14 causes operation information to be displayed on a screen displayed on each of the first remaining apparatuses. The operation information indicates content pertaining to an operation on the screen displayed on the first operated apparatus. Thus, the user of the first remaining apparatus can recognize the content pertaining to the operation on the screen displayed on the first operated apparatus by checking the screen of the apparatus possessed by the user.

The operation information that the control device 14 causes to be displayed on the screen displayed on the remaining apparatus may include at least one of the plurality of pieces of operation information indicated in Table 2. For the latitude and longitude in the location information indicated in Table 2, the control device 14 may cause a screen displayed on the remaining apparatus to display, as the operation information, an address obtained by converting the latitude and longitude in the location information. Thus, the user of the remaining apparatus can intuitively recognize, in real time, the position of the operated apparatus and the user who is carrying out the operation on the screen displayed on the operated apparatus, and the content of the operation on the screen.

The control device 14 may cause operation information to be displayed on screens that are displayed on only remaining apparatuses which are not the operated apparatus among the programmable display 1, the first remote apparatus, and the second remote apparatus and which each display a screen including an identical-content region having content identical with that of the screen displayed on the operated apparatus. The "identical-content region" is a region that indicates, in a screen displayed on a remaining apparatus other than the operated apparatus, content identical with that of the screen displayed on the operated apparatus.

The following description will discuss a state in which the second remote apparatus displays a screen including content that is at least partially identical with that of the display screen displayed on the display section 10. In the first case, in this state, among a plurality of layer images in a screen displayed on the first remaining apparatus, the control device 14 sets a layer image which is not a layer image defined by the identical-content region to be an image displaying operation information.

For example, among a plurality of layer images in the screen P1 displayed on the programmable display 1, the control device 14 sets, as an image displaying operation information, a layer image which is not layer images defined by the regions 30 and 31 that are identical-content regions having content identical with that of the screen PA displayed on the remote apparatus 2A. Here, the region that defines an image displaying operation information is each of the regions 32 and 33.

Similarly, among a plurality of layer images in the screen PB displayed on the remote apparatus 2B, the control device 14 sets, as an image displaying operation information, a layer image which is not layer images defined by the regions 30B and 31B that are identical-content regions having content identical with that of the screen PA displayed on the remote apparatus 2A. Here, the region that defines an image displaying operation information is each of the regions 32B and 33B. Thus, the control device 14 can easily display operation information on the first remaining apparatus other than the first operated apparatus whose screen is being operated.

The following description will discuss a state in which, in the first case, the second remote apparatus displays a screen including content that is at least partially identical with that of the display screen displayed on the display section 10. In this state, the control device 14 sets, as images displayed in a first display format, one or some of a plurality of layer images in a screen displayed on the first remote apparatus. That is, the control device 14 sets, as an image displayed in the first display format, a part of an image in a screen displayed on the first remote apparatus that is connected to the programmable display 1 in the synchronous mode.

For example, the control device 14 makes an image of the region 31B opaque which defines one or some of a plurality of layer images in the screen PB displayed on the remote apparatus 2B. In this case, the first display format is a format in which a displayed image is made opaque.

Furthermore, the control device 14 sets, as images displayed in a second display format different from the first display format, one or some of a plurality of layer images in a screen displayed on the second remote apparatus. That is, the control device 14 sets, as an image displayed in the second display format, a part of an image in a screen displayed on the second remote apparatus that is connected to the programmable display 1 in the asynchronous mode.

For example, the control device 14 makes an image of the region 31C semitransparent which defines one or some of a plurality of layer images in the screen PC displayed on the remote apparatus 2C. In this case, the second display format is a format in which a displayed image is made semitransparent. Since the image in the region 31C is a semitransparent image, a part of the region 30C that overlaps with the region 31C is also displayed.

Thus, the user of the remote apparatus can recognize whether the apparatus possessed by the user is connected to the programmable display 1 in the synchronous mode or is connected to the programmable display 1 in the asynchronous mode. The region 31C has content that is identical with that of the region 31 included in the screen P1 displayed on the programmable display 1, except for the display format.

### (Variation 1)

The control device 14 may determine whether or not an operation on a screen displayed on the first operated apparatus is an effective operation. A case in which the control device 14 determines that an operation on the screen displayed on the first operated apparatus is an effective operation is defined as a fourth case, and a case in which the control device 14 determines that an operation on the screen displayed on the first operated apparatus is an ineffective operation is defined as a fifth case.

The following description will discuss a state in which, in the first case, the second remote apparatus displays a screen including content that is at least partially identical with that of the display screen displayed on the display section 10. In this state, in the fourth case, the control device 14 causes operation information to be displayed on the screen displayed on the first remaining apparatus, and in the fifth case, the control device 14 does not cause operation information to be displayed on the screen displayed on the first remaining apparatus.

Operation information indicating content pertaining to the operation determined to be an effective operation is displayed on a screen displayed on the first remaining apparatus other than the first operated apparatus. Operation information indicating content pertaining to the operation determined to be an ineffective operation is not displayed on the screen displayed on the first remaining apparatus. Therefore, the user of the first remaining apparatus other than the first operated apparatus can be made to recognize only the content pertaining to the effective operation.

### (Variation 2)

In Fig. 1, users of the plurality of remote apparatuses including the remote apparatuses 2A through 2E each can select one of the synchronous mode and the asynchronous mode by a touch operation on the remote apparatus when the remote apparatus is connected to the programmable display 1. Information of the selected mode is transmitted from the remote apparatus to the programmable display 1, and the control device 14 permits the mode information to fix the mode.

### (Communication between programmable display 1 and remote apparatuses 2A through 2E)

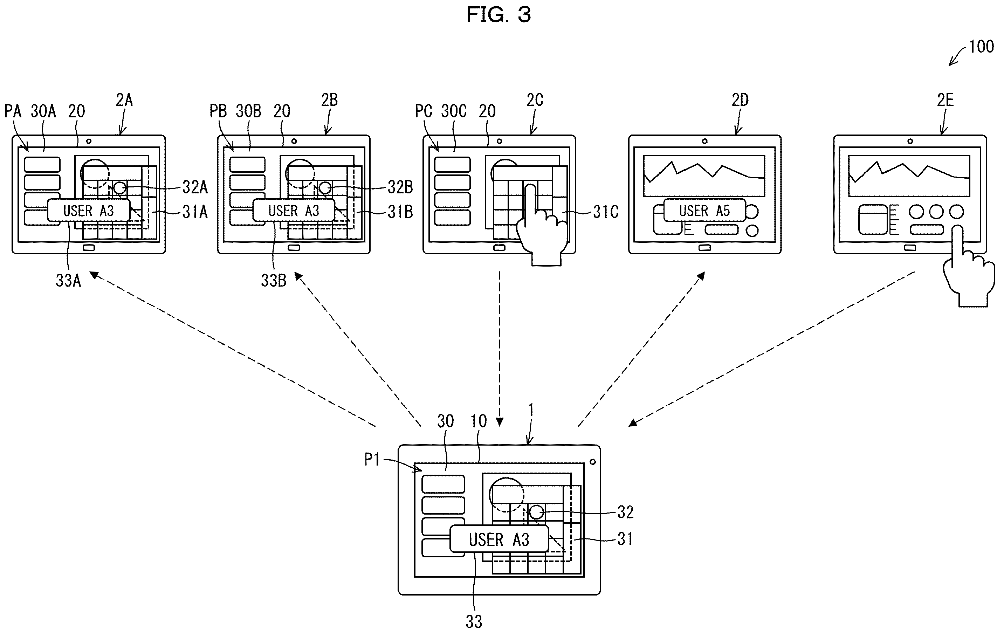

Fig. 3 is a diagram illustrating another example of a state in which, in the screen synchronization system 100 illustrated in Fig. 1, communication is carried out between the programmable display 1 and the remote apparatuses 2A through 2E. For Fig. 3, a case is described in which an operated apparatus is the remote apparatus 2C that is connected to the programmable display 1 in the asynchronous mode.

In a case where a user A3 of the remote apparatus 2C carries out a touch operation on the touch panel 21 of the remote apparatus 2C, the control device 24 of the remote apparatus 2C transmits operation request data to the programmable display 1. The control device 14 of the programmable display 1 receives operation request data from the remote apparatus 2C. Upon receipt of the operation request data, the control device 14 prepares operation information which indicates content pertaining to an operation on the screen PC displayed on the remote apparatus 2C.

The control device 14 causes the screen P1 to display the prepared operation information. Thus, regions 32 and 33 are added to the screen P1 having regions 30 and 31, and consequently the screen P1 has the regions 30 through 33. The region 32 defines an image indicating a part of the screen P1 that corresponds to a touch point on the screen PC by the user A3. The region 33 defines an image that identifies the user A3 of the remote apparatus 2C which is the operated apparatus among the programmable display 1 and the remote apparatuses 2A through 2C which display respective screens having content that is at least partially identical with that of the screen P1.

The control device 14 causes operation information to be displayed on the screens PA and PB that are displayed on remaining apparatuses which are not the operated apparatus among the remote apparatuses 2A through 2C each displaying a screen including content that is at least partially identical with that of the screen P1. Specifically, the control device 14 transmits the operation information to the remote apparatuses 2A and 2B. After the control device 14 transmits the operation information to the remote apparatuses 2A and 2B, the control device 24 of the remote apparatus 2A receives the operation information from the control device 14, prepares an image on the basis of the received operation information, and causes the screen PA to display the image.

Thus, regions 32A and 33A are added to the screen PA having regions 30A and 31A, and consequently the screen PA has the regions 30A through 33A. The region 32A defines an image indicating a part of the screen PA that corresponds to a touch point on the screen PC by the user A3. The region 33A defines an image that identifies the user A3 of the remote apparatus 2C which is the operated apparatus.

Similarly, the control device 24 of the remote apparatus 2B receives the operation information from the control device 14, prepares an image on the basis of the received operation information, and causes the screen PB to display the image. Thus, regions 32B and 33B are added to the screen PB having regions 30B and 31B, and consequently the screen PB has the regions 30B through 33B. The region 32B defines an image indicating a part of the screen PB that corresponds to a touch point on the screen PC by the user A3. The region 33B defines an image that identifies the user A3 of the remote apparatus 2C which is the operated apparatus.

Furthermore, the control device 14 makes an image of the region 31C opaque which defines one or some of a plurality of layer images in the screen PC displayed on the remote apparatus 2C. In this case, the second display format is a format in which a displayed image is made opaque.

The control device 14 may make an image of the region 31 semitransparent which defines one or some of a plurality of layer images in the screen P1 displayed on the programmable display 1. The control device 14 makes an image of the region 31A semitransparent which defines one or some of a plurality of layer images in the screen PA displayed on the remote apparatus 2A. In this case, the first display format is a format in which a displayed image is made semitransparent. Similarly, the control device 14 sets an image in the region 31B semitransparent in the screen PB displayed on the remote apparatus 2B.

### (Transition of states of remote apparatuses 2A and 2C)

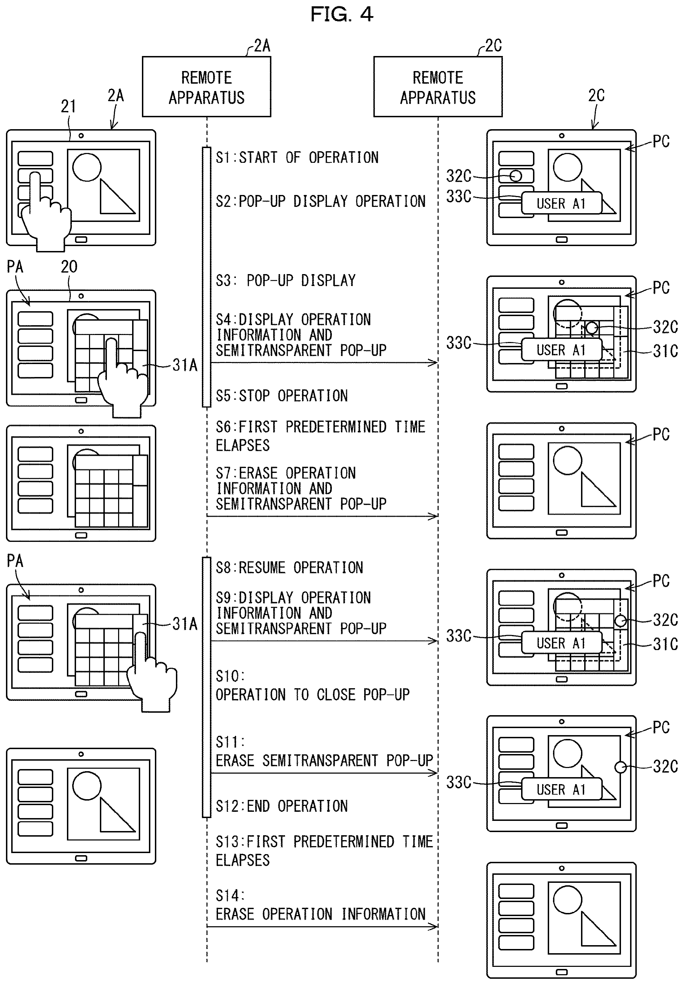

Fig. 4 is a diagram illustrating a transition of states of remote apparatuses 2A and 2C in the screen synchronization system 100 illustrated in Fig. 2. First, as illustrated in Fig. 4, the user A1 of the remote apparatus 2A starts an operation on the touch panel 21 of the remote apparatus 2A (S1). The user A1 carries out an operation for pop-up display on the touch panel 21 (S2).

Thus, in the remote apparatus 2A, the control device 24 causes the display panel 20 to carry out the pop-up display by displaying the region 31A in the screen PA displayed on the remote apparatus 2A (S3). Next, the control device 24 transmits operation request data to the programmable display 1. Upon receipt of the operation request data, the control device 14 of the programmable display 1 prepares operation information and transmits the prepared operation information to the remote apparatus 2C.

Thus, the control device 14 causes the screen PC displayed on the remote apparatus 2C to display the operation information and a semitransparent pop-up (S4). Thus, the screen PC includes the regions 31C through 33C.

Next, the user A1 stops an operation on the touch panel 21 of the remote apparatus 2A (S5). Then, a first predetermined time elapses from the time point when the operation on the touch panel 21 is stopped (S6). After the first predetermined time has elapsed, the control device 14 causes the screen PC to erase the operation information and the semitransparent pop-up (S7). Thus, the regions 31C through 33C are erased from the screen PC.

The user A1 resumes the operation on the touch panel 21 of the remote apparatus 2A (S8). When the operation on the touch panel 21 is resumed, similarly to step S4, the control device 14 causes the screen PC to display the operation information and the semitransparent pop-up (S9). Thus, the screen PC includes the regions 31C through 33C.

The user A1 carries out an operation for closing the pop-up display on the touch panel 21 of the remote apparatus 2A (S10). Thus, in the remote apparatus 2A, the control device 24 causes the screen PA displayed on the remote apparatus 2A to erase the pop-up. Thus, the region 31A is erased from the screen PA.

The control device 14 causes the screen PC displayed on the remote apparatus 2C to erase the semitransparent pop-up (S11). Thus, the region 31C is erased from the screen PC. The user A1 ends the operation on the touch panel 21 of the remote apparatus 2A (S12). Then, the first predetermined time elapses from the time point when the operation on the touch panel 21 is ended (S13). After the first predetermined time has elapsed, the control device 14 causes the screen PC to erase the operation information (S14). Thus, the regions 32C and 33C are erased from the screen PC displayed on the remote apparatus 2C.

### (Prohibition of operation on identical-content region in screen)

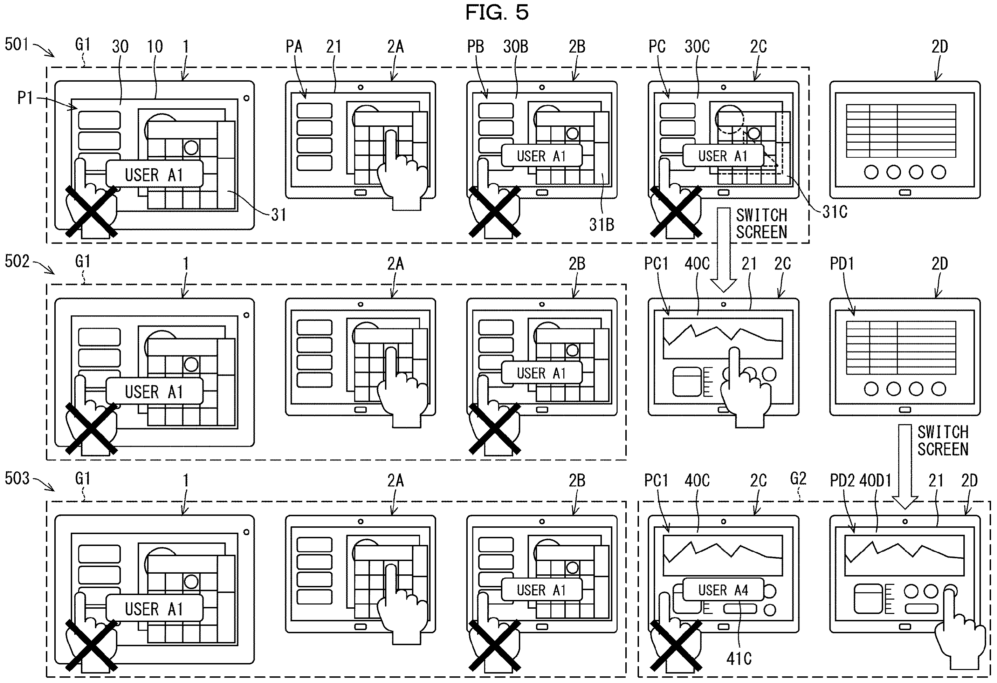

Fig. 5 is a diagram for explaining prohibition of an operation on an identical-content region in a screen in the screen synchronization system 100 illustrated in Fig. 1. In Fig. 5, the remote apparatus 2E is omitted. The following description will discuss a case in which the user A1 of the remote apparatus 2A carries out a touch operation on the touch panel 21 of the remote apparatus 2A connected to the programmable display 1 in the synchronous mode, as indicated by the reference numeral 501 in Fig. 5.

In this case, the control device 14 of the programmable display 1 prohibits an operation on identical-content regions on the programmable display 1 and the remote apparatuses 2B and 2C which are remaining apparatuses other than the operated apparatus among apparatuses displaying screens including the identical-content regions having identical content (prohibition step). At this time, a group G1 is formed which is a group of apparatuses displaying screens which include identical-content regions having identical content. The group G1 is a group including the programmable display 1 and the remote apparatuses 2A through 2C.

Specifically, the control device 14 prohibits an operation on the regions 30 and 31 which are identical-content regions in the screen P1 displayed on the programmable display 1. The control device 14 prohibits an operation on the regions 30B and 31B which are identical-content regions in the screen PB displayed on the remote apparatus 2B. The control device 14 prohibits an operation on the regions 30C and 31C which are identical-content regions in the screen PC displayed on the remote apparatus 2C.

In a case where the control device 14 prohibits an operation on the identical-content region, the operation on the identical-content region may be prohibited while an operation on a screen displayed on the operated apparatus is continued. In a case where the control device 14 prohibits an operation on the identical-content region, the operation on the identical-content region may be prohibited from the time point when the operation on the screen displayed on the operated apparatus is stopped to when a second predetermined time has elapsed.

As described above, the control device 14 not only prohibits the identical-content region of the screen PB displayed on the remote apparatus 2B connected to the programmable display 1 in the synchronous mode, but also prohibits an operation on the identical-content region in the screen PC displayed on the remote apparatus 2C connected to the programmable display 1 in the asynchronous mode.

The following description will discuss a case in which the user A3 of the remote apparatus 2C carries out a touch operation on the touch panel 21 of the remote apparatus 2C connected to the programmable display 1 in the asynchronous mode, unlike the case indicated by the reference numeral 501 in Fig. 5. In this case, similarly, the control device 14 prohibits an operation on the identical-content regions on the programmable display 1 and the remote apparatuses 2A and 2B which are remaining apparatuses other than the operated apparatus among apparatuses displaying screens which include identical-content regions having identical content. That is, the control device 14 prohibits an operation on the identical-content region even for the remote apparatuses 2A and 2B connected to the programmable display 1 in the synchronous mode.

From the details described above for the reference numeral 501 in Fig. 5, the following configuration is derived. The remote apparatuses 2A and 2B are defined as a first remote apparatus, and the remote apparatuses 2C and 2D are defined as a second remote apparatus. The following description will discuss a state in which, in the first case, the second remote apparatus displays a screen including content that is at least partially identical with that of the display screen displayed on the display section 10. In this state, the control device 14 prohibits, for the first remaining apparatus, an operation on an identical-content region that has content identical with that of the screen displayed on the first operated apparatus and that is in the screen displayed on the first remaining apparatus.

The following description will discuss a state in which the second remote apparatus connected to the programmable display 1 in the asynchronous mode displays a screen including content that is at least partially identical with that of the screen P1 displayed on the display section 10 of the programmable display 1. In this state, the programmable display 1, the first remote apparatus, and the second remote apparatus display screens including identical-content regions having identical content. Among these apparatuses, when any of the apparatuses is operated, the control device 14 prohibits operations on the identical-content regions on first remaining apparatuses other than the first operated apparatus.

That is, in the above state, not only a synchronous screen displayed on the first remote apparatus connected to the programmable display 1 in the synchronous mode but also a screen displayed on the second remote apparatus connected to the programmable display 1 in the asynchronous mode can be screens in each of which an operation on the identical-content region is prohibited. Therefore, in a case where the second remote apparatus displays a screen including an identical-content region, the control device 14 can prevent simultaneous operations on identical-content regions having identical content among the programmable display 1, the first remote apparatus, and the second remote apparatus.

In the programmable display 1 and the remote apparatuses 2A and 2B, in the synchronous mode, conflicting operations on synchronous regions which are synchronized with each other are prohibited. The following description will discuss a case assuming that the control device 14 does not prohibit an operation on an identical-content region in a screen displayed on the first remaining apparatus.

In this case, in the remote apparatuses 2C and 2D connected to the programmable display 1 in the asynchronous mode, conflicting operations are not prohibited. Therefore, for example, in a case where the remote apparatus 2C displays a screen including content identical with that of the screen displayed on the programmable display 1, conflicting operations may occur between the remote apparatus 2C and the programmable display 1 and the remote apparatuses 2A and 2B.

In order to prevent conflicting operations between the remote apparatus 2C and the programmable display 1 and the remote apparatuses 2A and 2B, the control device 14 prohibits an operation on an identical-content region in a screen displayed on each of the first remaining apparatuses. Thus, even for the remote apparatuses 2C and 2D connected to the programmable display 1 in the asynchronous mode, restrictions can be imposed when screens including the identical-content regions are displayed.

The following description will discuss a case in which the user A3 of the remote apparatus 2C carries out a touch operation on the touch panel 21 of the remote apparatus 2C, as indicated by the reference numeral 502 in Fig. 5. In this case, the user A3 carries out a touch operation on a predetermined region (a region that defines an image such as a button) (not illustrated) included in the screen PC displayed on the remote apparatus 2C, and thus the remote apparatus 2C transmits operation request data to the control device 14. The predetermined region is a region other than the identical-content region in the screen PC.

The control device 14 receives the operation request data from the remote apparatus 2C and transmits, to the remote apparatus 2C, data (drawing information) of a screen PC1 after switching. Thus, the screen displayed on the remote apparatus 2C is switched from the screen PC to the screen PC1. As such, the control device 14 carries out a process of switching from the screen PC to the screen PC1.

The screen PC1 is different from the screen PC and does not include an identical-content region having content identical with that of the screen PA displayed on the remote apparatus 2A. The screen PC1 has a region 40C. In a state in which the remote apparatus 2C displays the screen PC1, the remote apparatus 2C is not included in the group G1, and the control device 14 does not prohibit an operation on the screen PC1 on the remote apparatus 2C.

That is, for the remote apparatus 2C connected to the programmable display 1 in the asynchronous mode, the control device 14 receives input of a touch operation on the predetermined region, that is, permits an operation on the predetermined region. Thus, the control device 14 allows switching from a state in which an operation on an identical-content region is prohibited to a state in which another screen is displayed.

The following description will discuss a case in which a user A4 of the remote apparatus 2D carries out a touch operation on the touch panel 21 of the remote apparatus 2D, and thus the control device 14 carries out a process of switching the screen displayed on the remote apparatus 2D from a screen PD1 to a screen PD2, as indicated by the reference numeral 503 in Fig. 5.

The screen PD1 is a screen that does not include an identical-content region having content identical with that of the screen PA displayed on the remote apparatus 2A and that does not include an identical-content region having content identical with that of the screen PC1 displayed on the remote apparatus 2C. The screen PD2 is a screen that does not include an identical-content region having content identical with that of the screen PA displayed on the remote apparatus 2A and that includes an identical-content region having content identical with that of the screen PC1 displayed on the remote apparatus 2C. The screen PD2 has a region 40D1. The region 40D1 is a region having content identical with that of the region 40C included in the screen PC1.

The following description will discuss a case in which the operated apparatus is the remote apparatus 2D and the remote apparatus 2D is displaying the screen PD2. In this state, the control device 14 prohibits an operation on the identical-content region on the remote apparatus 2C which is a remaining apparatus other than the operated apparatus among the remote apparatuses 2C and 2D displaying screens including identical-content regions having identical content. At this time, a group G2 is formed which is a group of apparatuses displaying screens which include identical-content regions having identical content. The group G2 is a group including the remote apparatuses 2C and 2D.

Specifically, the control device 14 prohibits, in the screen PC1 displayed on the remote apparatus 2C, an operation on the region 40C that is an identical-content region having content identical with that of the screen PD2 displayed on the remote apparatus 2D. When the operation on the screen PD2 displayed on the remote apparatus 2D is carried out, the screen PC1 is to have the regions 40C and 41C.

The region 40C is an identical-content region having content identical with that of the region 40D1 included in the screen PD2. The region 41C is a region that is added when an operation is carried out on the screen PD2 displayed on the remote apparatus 2D. An operation on the screen displayed on the remote apparatus 2D that is the operated apparatus included in the group G2 and an operation on the screen displayed on the remote apparatus 2A that is the operated apparatus included in the group G1 can be carried out simultaneously and independently of each other.

From the details described above for the reference numeral 503 in Fig. 5, the following configuration is derived. Here, the remote apparatuses 2A and 2B are defined as a first remote apparatus, the remote apparatus 2C is defined as a second remote apparatus, and the remote apparatus 2D is defined as a third remote apparatus. A case in which the control device 14 permits a connection of the first remote apparatus in the synchronous mode, permits a connection of the second remote apparatus in the asynchronous mode, and permits a connection of the third remote apparatus in the asynchronous mode is defined as a third case.

Furthermore, among the programmable display 1 and the first remote apparatus, an apparatus whose screen is being operated is defined as a third operated apparatus, and an apparatus other than the third operated apparatus is defined as a third remaining apparatus. Furthermore, among the second remote apparatus and the third remote apparatus, an apparatus whose screen is being operated is defined as a fourth operated apparatus, and an apparatus other than the fourth operated apparatus is defined as a fourth remaining apparatus.

At this time, in the third case, in a state in which the second remote apparatus displays a screen including content that is at least partially identical with that of a screen displayed on the third remote apparatus, the control device 14 carries out the following process. Specifically, the control device 14 prohibits, for the third remaining apparatus, an operation on an identical-content region that has content identical with that of the screen displayed on the third operated apparatus and that is in the screen displayed on the third remaining apparatus. Moreover, the control device 14 prohibits, for the fourth remaining apparatus, an operation on an identical-content region that has content identical with that of the screen displayed on the fourth operated apparatus and that is in the screen displayed on the fourth remaining apparatus.

The control device 14 can prevent simultaneous operations on the identical-content regions having identical content among the programmable display 1 and the first remote apparatus, and at the same time can prevent simultaneous operations on the identical-content regions having identical content among the second remote apparatus and the third remote apparatus. That is, it is possible to form a plurality of groups of apparatuses for which simultaneous operations on the identical-content regions having identical content can be prevented.

The screen displayed on the first remaining apparatus is a screen that defines a composite image composed of a plurality of layer images which overlap with each other. The identical-content region is a region that defines one or some of the plurality of layer images included in the composite image.

Thus, the control device 14 can prohibit, for the first remaining apparatuses other than the first operated apparatus, an operation on a region that defines one or some of the plurality of layer images. Therefore, for the remote apparatus connected to the programmable display in the asynchronous mode, an operation can be permitted in a region other than the identical-content region, and display of a screen different from the synchronous screen can be permitted.

A case in which the remote apparatus 2C is defined as a first remote apparatus, the remote apparatus 2D is defined as a second remote apparatus, and the control device 14 permits a connection of the first remote apparatus in the asynchronous mode and permits a connection of the second remote apparatus in the asynchronous mode is defined as a second case. Furthermore, among the first remote apparatus and the second remote apparatus, an apparatus whose screen is being operated is defined as a second operated apparatus, and an apparatus other than the second operated apparatus is defined as a second remaining apparatus.

Here, the following description will discuss a state in which, in the second case, the first remote apparatus displays a screen including content that is at least partially identical with that of a screen displayed on the second remote apparatus. In this state, the control device 14 prohibits, for the second remaining apparatus other than the second operated apparatus, an operation on an identical-content region that has content identical with that of the screen displayed on the second operated apparatus and that is in the screen displayed on the second remaining apparatus.

Thus, the control device 14 can prevent simultaneous operations on the identical-content regions having identical content among the first remote apparatus and the second remote apparatus which are connected to the programmable display 1 in the asynchronous mode.

The following description will discuss a case assuming that, in a state in which the remote apparatuses 2C and 2D connected to the programmable display 1 in the asynchronous mode display screens having at least partially identical content, the control device 14 does not prohibit an operation on an identical-content region in a screen displayed on the second remaining apparatus. In this case, conflicting operations may occur between the remote apparatuses 2C and 2D. Therefore, in order to prevent conflicting operations from occurring between the remote apparatuses 2C and 2D, the control device 14 prohibits an operation on the identical-content region in the screen displayed on the second remaining apparatus in a state in which the remote apparatuses 2C and 2D are displaying screens having at least partially identical content.

In the synchronous mode, among the plurality of apparatuses illustrated in Fig. 5, screens including synchronous regions which are synchronized with each other are displayed, and the control device 14 automatically carries out control for prohibiting an operation on the synchronous region, while an operation can be carried out on each of the plurality of apparatuses. In the synchronous mode, screen switching, pop-up display during an operation, and the like are also linked among the plurality of apparatuses. Hereinafter, the plurality of apparatuses refer to the programmable display 1 and the plurality of remote apparatuses including the remote apparatuses 2A through 2D.

In the asynchronous mode, screens that do not include synchronous regions among the plurality of apparatuses can be displayed. In that case, the control device 14 does not carry out control for prohibiting an operation, and the plurality of apparatuses can each be operated. In the asynchronous mode, even in a case where the plurality of apparatuses display identical screens, screen switching is not linked among the plurality of apparatuses.

### (Variation 3)

The control device 14 may cause an apparatus, for which an operation on an identical-content region is prohibited, to display, on a screen, prohibition information indicating that an operation is prohibited. In a screen displayed on an operated apparatus whose screen is being operated, the prohibition information is not displayed. Thus, a user of an apparatus for which an operation on an identical-content region is prohibited can recognize that an operation on the identical-content region is prohibited.

### (Variation 4)

The control device 14 may cause first information, second information, and third information to be displayed on screens displayed on a plurality of apparatuses. The first information is information indicating that the programmable display 1 and a remote apparatus are connected to each other. The second information is information indicating that the programmable display 1 and a remote apparatus are connected to each other in the synchronous mode. The third information is information that is indicated by switching the following four pieces of information (1) through (4).
(1) Information indicating a state in which a touch operation is not carried out on any of screens displayed on a plurality of apparatuses connected to each other. (2) Information indicating that a touch operation is being carried out on any of screens displayed on a plurality of remote apparatuses connected to the programmable display 1. (3) Information indicating that a touch operation is being carried out on the screen displayed on the programmable display 1. (4) Information indicating that a touch operation is being carried out on a screen displayed on an apparatus other than an apparatus that displays the third information.

### (Variation 5)

In a case where a remote HMI function for connecting a remote apparatus to the programmable display 1 is used, the control device 14 may cause one of fourth information, fifth information, and sixth information to be displayed on the display screen displayed on the display section 10 in accordance with operation statuses of a plurality of apparatuses. The fourth information is information that is displayed when none of the plurality of apparatuses is operated. The fifth information is information displayed when the programmable display 1 is being operated. The sixth information is information displayed when the remote apparatus is being operated.

The fourth information may be information indicating a state in which none of identical-content regions of screens displayed on the plurality of apparatuses is prohibited from being operated. The fifth information may be information indicating a state in which an operation on an identical-content region in a screen displayed on an apparatus (remote apparatus) other than the programmable display 1 is prohibited among a plurality of apparatuses that display screens including identical-content regions having identical content. The sixth information may be information indicating a state in which an operation on an identical-content region in a screen displayed on an apparatus other than a certain remote apparatus is prohibited among a plurality of apparatuses that display screens including identical-content regions having identical content.

### (Process for permitting operation)

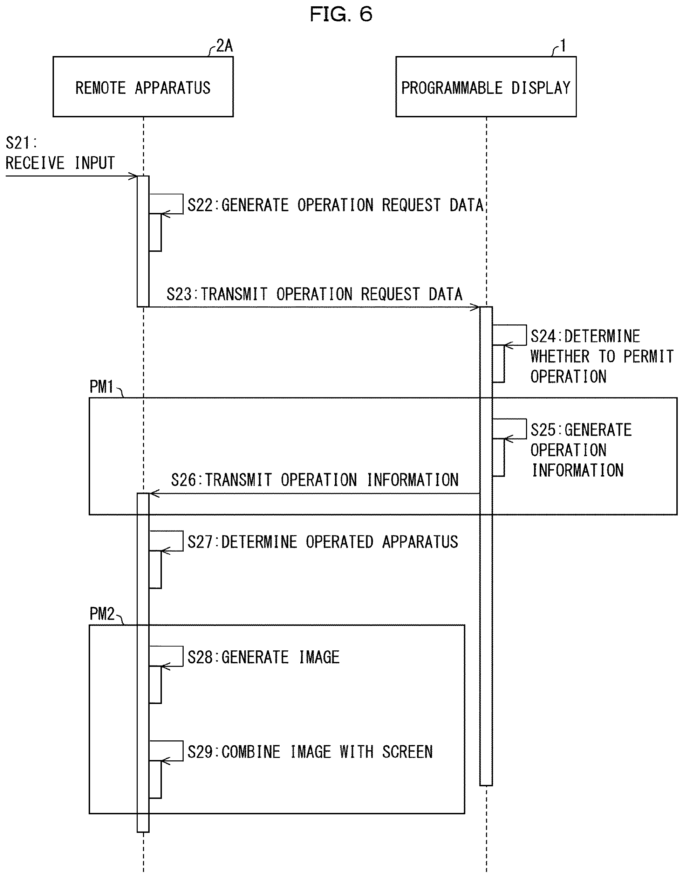

Fig. 6 illustrates a flow of a process in which the control device 14 included in the programmable display 1 illustrated in Fig. 1 permits an operation on a screen displayed on the remote apparatus 2A. First, as illustrated in Fig. 6, the touch panel 21 of the remote apparatus 2A receives input of a touch operation (S21). After the touch panel 21 has received the input of the touch operation, the control device 24 of the remote apparatus 2A prepares operation request data (S22).

After the control device 24 has prepared the operation request data, the operation request data is transmitted to the programmable display 1 (S23). Upon receipt of the operation request data from the remote apparatus 2A, the control device 14 of the programmable display 1 determines whether or not an operation on the screen displayed on the remote apparatus 2A is permitted (S24).

In a case where an apparatus which has transmitted the operation request data is a remaining apparatus other than an operated apparatus among the plurality of apparatuses which display screens including identical-content regions having identical content, the control device 14 prohibits an operation on an identical-content region of a screen displayed on the apparatus which has transmitted the operation request data. In a case where none of screens of the plurality of apparatuses which display screens including identical-content regions having identical content is operated, the control device 14 permits an operation on a screen displayed on the apparatus which has transmitted the operation request data.

The control device 14 maintains the state in which an operation on the screen displayed on the apparatus that has transmitted the operation request data is permitted, during a period from when the operation on the screen displayed on the apparatus is permitted to when a third predetermined time elapses.

In step S24, in a case where the control device 14 has determined that an operation on the screen displayed on the remote apparatus 2A is not permitted, the operation is prohibited. Meanwhile, in step S24, in a case where the control device 14 has determined to permit an operation on the screen displayed on the remote apparatus 2A, the control device 14 prepares operation information (S25).

The control device 14 transmits the prepared operation information to the remote apparatus 2A (S26). When the control device 24 of the remote apparatus 2A has received the operation information from the programmable display 1, an operated apparatus whose screen is being operated is determined (S27). Specifically, the control device 24 determines which one of the plurality of apparatuses is the operated apparatus whose screen is being operated.

The control device 24 prepares an image indicating the operation information (S28). The control device 24 combines the prepared image with a screen displayed on the display panel 20 (S29). The processes indicated by PM1 and PM2 in Fig. 6 are processes that can be carried out in step S24 on condition that an operation on the screen is permitted.

### (Permission of operation and prohibition of operation)

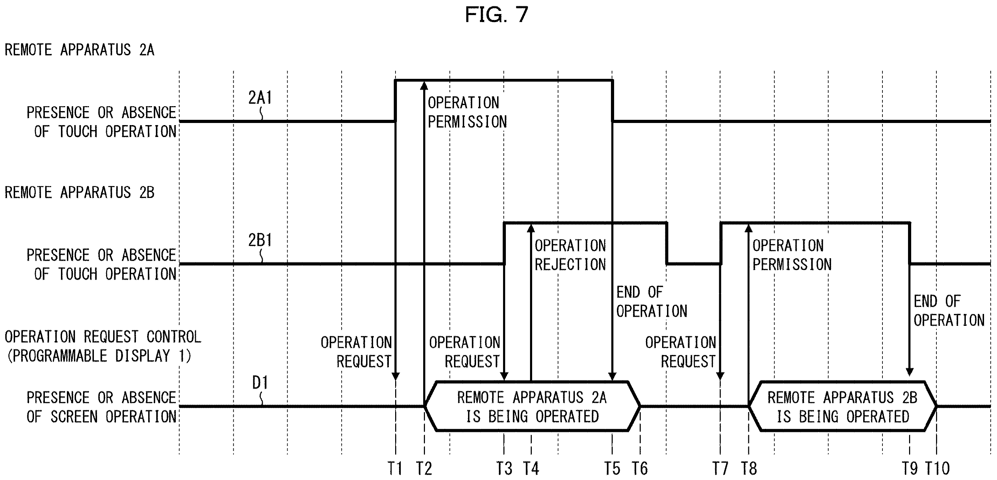

Fig. 7 is a timing chart illustrating a process in which the control device 14 included in the programmable display 1 illustrated in Fig. 1 permits or prohibits an operation on screens displayed on the remote apparatuses 2A and 2B. In Fig. 7, a graph 2A1 is a graph illustrating the presence or absence of a touch operation on the touch panel 21 of the remote apparatus 2A. A graph 2B1 is a graph illustrating the presence or absence of a touch operation on the touch panel 21 of the remote apparatus 2B.

In each of the graphs 2A1 and 2B1, a rising portion indicates that there is a touch operation, and a falling portion indicates that there is no touch operation. A graph D1 is a graph indicating that a screen of one of the remote apparatuses 2A and 2B is being operated.

As illustrated in Fig. 7, in a case where there is a touch operation on the touch panel 21 of the remote apparatus 2A at a time T1, the control device 24 of the remote apparatus 2A transmits operation request data to the programmable display 1. At a time T2, the control device 14 of the programmable display 1 determines to permit an operation on the screen displayed on the remote apparatus 2A, and transmits operation permission information to the remote apparatus 2A. The operation permission information is information indicating that an operation on the screen displayed on the remote apparatus 2A is permitted. The control device 14 then recognizes that the operation on the screen displayed on the remote apparatus 2A continues.

In a case where there is a touch operation on the touch panel 21 of the remote apparatus 2B at a time T3, the control device 24 of the remote apparatus 2B transmits operation request data to the programmable display 1. At a time T4, the control device 14 of the programmable display 1 determines that an operation on the screen displayed on the remote apparatus 2B is not permitted because the operation on the screen displayed on the remote apparatus 2A is continued. The control device 14 transmits operation rejection information, which indicates that an operation on the screen displayed on the remote apparatus 2B is not permitted, to the remote apparatus 2B. Therefore, an operation on an identical-content region of the screen displayed on the remote apparatus 2B is rejected.

The operation on the screen displayed on the remote apparatus 2A ends at a time T5. The control device 14 recognizes that, at a time T6, the operation on the screen displayed on the remote apparatus 2A has ended in accordance with the end of the operation on the screen displayed on the remote apparatus 2A. Specifically, the control device 14 recognizes that the operation on the screen displayed on the remote apparatus 2A has ended when the second predetermined time has elapsed after the touch operation on the remote apparatus 2A is stopped.

In a case where there is a touch operation on the touch panel 21 of the remote apparatus 2B at a time T7, the control device 24 of the remote apparatus 2B transmits operation request data to the programmable display 1. At a time T8, the programmable display 1 determines to permit an operation on the screen displayed on the remote apparatus 2B, and transmits operation permission information to the remote apparatus 2B. The operation permission information is information indicating that an operation on the screen displayed on the remote apparatus 2B is permitted. The control device 14 then recognizes that the operation on the screen displayed on the remote apparatus 2B continues.

The operation on the screen displayed on the remote apparatus 2B ends at a time T9. The control device 14 recognizes, at a time T10, that the operation on the screen displayed on the remote apparatus 2B has been ended, in accordance with the end of the operation on the screen displayed on the remote apparatus 2B.

### (Operation type determination)

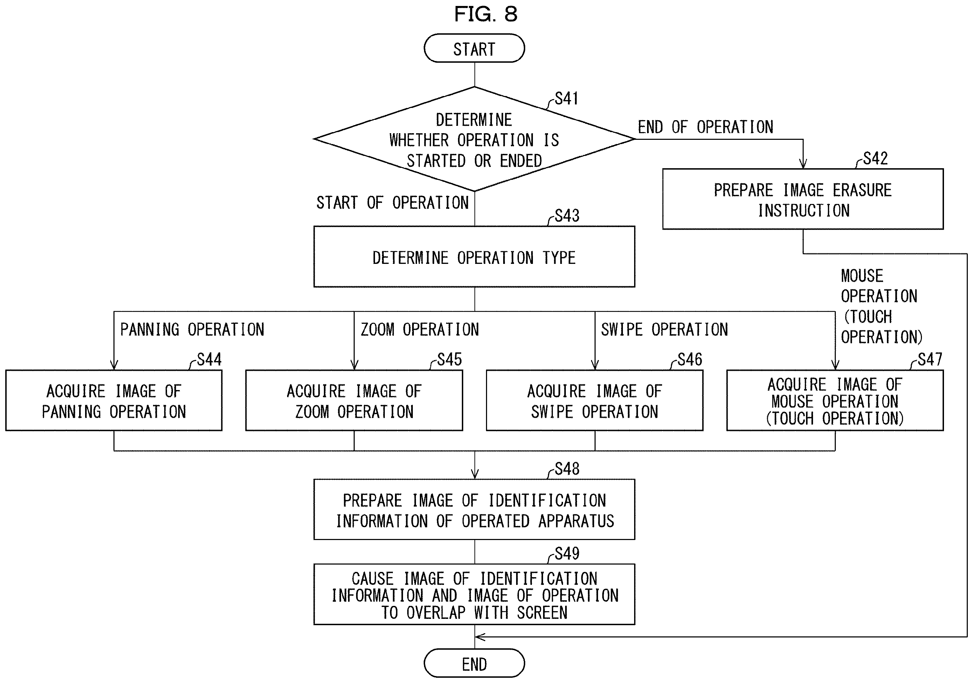

Fig. 8 is a flowchart illustrating a process in which the control device 14 or the control device 24 illustrated in Fig. 1 causes an image of identification information and an image of an operation to overlap with a screen. As illustrated in Fig. 8, the control device 14 determines whether an operation on a screen displayed on an operated apparatus is started or ended among the programmable display 1 and the plurality of remote apparatuses (S41).

In step S41, in a case where the control device 14 has determined that an operation on the screen is ended, the control device 14 prepares an image erasure instruction (S42). The control device 14 transmits the image erasure instruction to the operated apparatus, and the operated apparatus erases the image indicating the operation information. Then, the control device 14 ends the process.

In a case where the control device 14 has determined in step S41 that an operation on the screen is started, the control device 14 determines the operation type of the operation on the screen (S43). In a case where the control device 14 has determined in step S43 that the operation on the screen is a panning operation, the control device 14 acquires an image (an image indicating operation information) of the panning operation stored in the storage section 12 (S44). After the acquisition of the image of the panning operation, the control device 14 prepares an image (an image indicating operation information) of identification information of the operated apparatus (S48).

In a case where the control device 14 has determined in step S43 that the operation on the screen is a zoom operation, the control device 14 acquires an image (an image indicating operation information) of the zoom operation stored in the storage section 12 (S45). After the acquisition of the image of the zoom operation, the control device 14 proceeds to a process in step S48. In a case where the control device 14 has determined in step S43 that the operation on the screen is a swipe operation, the control device 14 acquires an image (an image indicating operation information) of the swipe operation stored in the storage section 12 (S46). After the acquisition of the image of the swipe operation, the control device 14 proceeds to a process in step S48.

In a case where the control device 14 has determined in step S43 that the operation on the screen is a mouse operation (touch operation), the control device 14 acquires an image (an image indicating operation information) of the mouse operation (touch operation) stored in the storage section 12 (S47). After the acquisition of the image of the mouse operation (touch operation), the control device 14 proceeds to a process in step S48.

After the process in step S48, the control device 14 causes the image of the identification information and the image of the operation acquired in any of steps S44 through S47 to overlap with a screen displayed on a remaining apparatus other than the operated apparatus (S49). Thus, it is possible to display, on the screen, an image that differs in accordance with the operation type.

Note that, after step S43, the control device 14 may transmit the operation information to a remote apparatus which is not the operated apparatus among the plurality of remote apparatuses. In this case, in steps S44 through S47, the control device 24 of the remote apparatus which is not the operated apparatus may acquire an image of an operation stored in the data memory 22. Moreover, in step S48, the control device 24 of the remote apparatus which is not the operated apparatus may prepare an image of identification information, and carry out the process in step S49.

### [Software Implementation Example]

Functions of the programmable display 1 and the remote apparatuses 2A through 2E (hereinafter referred to as a "device") can each be realized by a program for causing a computer to function as the device, the program causing the computer to function as control blocks (in particular, the control device 14 or 24) of the device.

In this case, the device includes, as hardware for executing the program, a computer including at least one control device (e.g., a processor) and at least one storage device (e.g., a memory). The functions described in the above embodiments are realized by the program being executed by the at least one control device and the at least one storage device.

The program may be recorded in one or more non-transitory computer-readable recording media. The recording media may be included in the device or need not be included in the device. In the latter case, the program may be supplied to the device via any wired or wireless transmission medium.

Furthermore, some or all of functions of the control blocks can also be realized by a logic circuit. For example, the present invention encompasses, in its scope, an integrated circuit in which a logic circuit that functions as each of the above-described control blocks is formed. In addition, the function of each of the control blocks can be realized by, for example, a quantum computer.

Aspects of the present invention can also be expressed as follows:
A programmable display in accordance with an aspect 1 of the present invention is connectable to a plurality of remote apparatuses including a first remote apparatus and a second remote apparatus, the programmable display including: a display section that displays a screen; and a control device that permits, for each of the plurality of remote apparatuses, a connection in a synchronous mode or a connection in an asynchronous mode, the synchronous mode being a mode in which at least one of the plurality of remote apparatuses displays a synchronous screen which is at least partially synchronized with a display screen displayed on the display section, the asynchronous mode being a mode in which at least one of the plurality of remote apparatuses is permitted to display a screen different from the synchronous screen, and in a first case in which a connection of the first remote apparatus in the synchronous mode is permitted and a connection of the second remote apparatus in the asynchronous mode is permitted, and in a state in which the second remote apparatus displays a screen including content that is at least partially identical with that of the display screen, the control device prohibiting an operation on an identical-content region of a screen displayed on each of first remaining apparatuses which are not a first operated apparatus whose screen is being operated among the programmable display, the first remote apparatus, and the second remote apparatus, the identical-content region having content identical with that of the screen displayed on the first operated apparatus.

The following description will discuss a state in which the second remote apparatus connected to the programmable display in the asynchronous mode displays a screen including content that is at least partially identical with that of the display screen displayed on the display section of the programmable display. In this state, the programmable display, the first remote apparatus, and the second remote apparatus display screens including identical-content regions having identical content. Among these apparatuses, when any of the apparatuses is operated, the control device prohibits operations on the identical-content regions on first remaining apparatuses other than the first operated apparatus.

That is, in the above state, not only a synchronous screen displayed on the first remote apparatus connected to the programmable display in the synchronous mode but also a screen displayed on the second remote apparatus connected to the programmable display in the asynchronous mode can be a screen in which an operation on the identical-content region is prohibited. Therefore, in a case where the second remote apparatus displays a screen including an identical-content region, the control device can prevent simultaneous operations on identical-content regions having identical content among the programmable display, the first remote apparatus, and the second remote apparatus.

The programmable display in accordance with an aspect 2 of the present invention may be configured, in the aspect 1, such that: in a second case in which a connection of the first remote apparatus in the asynchronous mode is permitted and a connection of the second remote apparatus in the asynchronous mode is permitted, and in a state in which the first remote apparatus displays a screen including content that is at least partially identical with that of a screen displayed on the second remote apparatus, the control device prohibits an operation on an identical-content region of a screen displayed on a second remaining apparatus which is not a second operated apparatus whose screen is being operated among the first remote apparatus and the second remote apparatus, the identical-content region having content identical with that of the screen displayed on the second operated apparatus.

The control device can prevent simultaneous operations on the identical-content regions having identical content among the first remote apparatus and the second remote apparatus which are connected to the programmable display in the asynchronous mode.

The programmable display in accordance with an aspect 3 of the present invention may be configured, in the aspect 1 or 2, such that: the plurality of remote apparatuses further include a third remote apparatus; and in a third case in which a connection of the first remote apparatus in the synchronous mode is permitted, a connection of the second remote apparatus in the asynchronous mode is permitted, and a connection of the third remote apparatus in the asynchronous mode is permitted, and in a state in which the second remote apparatus displays a screen including content that is at least partially identical with that of a screen displayed on the third remote apparatus, the control device prohibits an operation on an identical-content region of a screen displayed on a third remaining apparatus which is not a third operated apparatus whose screen is being operated among the programmable display and the first remote apparatus, the identical-content region having content identical with that of the screen displayed on the third operated apparatus, and prohibits an operation on an identical-content region of a screen displayed on a fourth remaining apparatus which is not a fourth operated apparatus whose screen is being operated among the second remote apparatus and the third remote apparatus, the identical-content region having content identical with that of the screen displayed on the fourth operated apparatus.

The control device can prevent simultaneous operations on the identical-content regions having identical content among the programmable display and the first remote apparatus, and at the same time can prevent simultaneous operations on the identical-content regions having identical content among the second remote apparatus and the third remote apparatus. That is, it is possible to form a plurality of groups of apparatuses for which simultaneous operations on the identical-content regions having identical content can be prevented.

The programmable display in accordance with an aspect 4 of the present invention may be configured, in any of the aspects 1 through 3, such that: in the first case, and in a state in which the second remote apparatus displays a screen including content that is at least partially identical with that of the display screen, the control device causes operation information to be displayed on the screen displayed on each of the first remaining apparatuses, the operation information indicating content pertaining to an operation on the screen displayed on the first operated apparatus.

A user of the first remaining apparatus which is not the first operated apparatus whose screen is being operated can recognize the content pertaining to an operation on the screen displayed on the first operated apparatus by checking the screen of the apparatus possessed by the user.

The programmable display in accordance with an aspect 5 of the present invention may be configured, in the aspect 4, such that: the control device determines whether or not an operation on the screen displayed on the first operated apparatus is an effective operation; and in the first case, and in a state in which the second remote apparatus displays a screen including content that is at least partially identical with that of the display screen, when the control device has determined that the operation on the screen displayed on the first operated apparatus is an effective operation, the control device causes the operation information to be displayed on the screen displayed on each of the first remaining apparatuses, and when the control device has determined that the operation on the screen displayed on the first operated apparatus is an ineffective operation, the control device does not cause the operation information to be displayed on the screen displayed on each of the first remaining apparatuses.

Operation information indicating content pertaining to the operation determined to be an effective operation is displayed on a screen displayed on the first remaining apparatus other than the first operated apparatus. Operation information indicating content pertaining to the operation determined to be an ineffective operation is not displayed on the screen displayed on the first remaining apparatus. Therefore, the user of the first remaining apparatus other than the first operated apparatus can be made to recognize only content pertaining to an effective operation.

The programmable display in accordance with an aspect 6 of the present invention may be configured, in any of the aspects 1 through 5, such that: the screen displayed on each of the first remaining apparatuses is a screen that defines a composite image composed of a plurality of layer images which overlap with each other; and the identical-content region is a region that defines one or some of the plurality of layer images included in the composite image.

The identical-content region is a region that defines one or some of the plurality of layer images. Thus, the control device can prohibit, for the first remaining apparatuses other than the first operated apparatus, an operation on a region that defines one or some of the plurality of layer images. Therefore, for the remote apparatus connected to the programmable display in the asynchronous mode, an operation can be permitted in a region other than the identical-content region, and display of a screen different from the synchronous screen can be permitted.

The programmable display in accordance with an aspect 7 of the present invention may be configured, in the aspect 6, such that: in the first case, and in a state in which the second remote apparatus displays a screen including content that is at least partially identical with that of the display screen, the control device sets, for the screen displayed on each of the first remaining apparatuses, a layer image which is not a layer image defined by the identical-content region among the plurality of layer images to be an image displaying operation information that indicates content pertaining to an operation on the screen displayed on the first operated apparatus.

The control device sets a layer image which is not a layer image defined by the identical-content region among the plurality of layer images to be an image displaying operation information that indicates content pertaining to an operation on the screen displayed on the first operated apparatus. Thus, the control device can easily display operation information on the first remaining apparatuses other than the first operated apparatus whose screen is being operated.

The programmable display in accordance with an aspect 8 of the present invention may be configured, in the aspect 6 or 7, such that: in the first case, and in a state in which the second remote apparatus displays a screen including content that is at least partially identical with that of the display screen, for the screen displayed on the first remote apparatus, the control device sets one or some of the plurality of layer images to be images displayed in a first display format, and for the screen displayed on the second remote apparatus, the control device sets one or some of the plurality of layer images to be images displayed in a second display format different from the first display format.

The user of the remote apparatus can recognize whether the apparatus possessed by the user is connected to the programmable display in the synchronous mode or is connected to the programmable display in the asynchronous mode.

A screen synchronization system in accordance with an aspect 9 of the present invention may include, in any of the aspects 1 through 8 described above, the programmable display and the plurality of remote apparatuses.

A screen synchronization method in accordance with an aspect 10 of the present invention is a method for synchronizing screens using a programmable display that is connectable to a plurality of remote apparatuses including a first remote apparatus and a second remote apparatus, the screen synchronization method including: a display step of displaying a screen on a display section of the programmable display; and a connection step of permitting, for each of the plurality of remote apparatuses, a connection in a synchronous mode or a connection in an asynchronous mode, the synchronous mode being a mode in which at least one of the plurality of remote apparatuses displays a synchronous screen which is at least partially synchronized with a display screen displayed on the display section, the asynchronous mode being a mode in which at least one of the plurality of remote apparatuses is permitted to display a screen different from the synchronous screen, and the screen synchronization method further including a prohibition step of, in a case in which a connection of the first remote apparatus in the synchronous mode is permitted and a connection of the second remote apparatus in the asynchronous mode is permitted, and in a state in which the second remote apparatus displays a screen including content that is at least partially identical with that of the display screen, prohibiting an operation on an identical-content region of a screen displayed on each of remaining apparatuses which are not an operated apparatus whose screen is being operated among the programmable display, the first remote apparatus, and the second remote apparatus, the identical-content region having content identical with that of the screen displayed on the operated apparatus.

The present invention is not limited to the embodiments described above, but may be altered in various ways by a skilled person within the scope of the claims. Any configuration based on a proper combination of a plurality of technical means disclosed in embodiments is also encompassed in the technical scope of the present invention.

### Reference Signs List

1: Programmable display
2A through 2E: Remote apparatus
10: Display section
14: Control device
30, 31, 30B, 31B, 30C, 31C, 40C: Region (identical-content region)
100: Screen synchronization system
P1, PC1, PD1, PD2: Screen

## Claims

1. A programmable display connectable to a plurality of remote apparatuses including a first remote apparatus and a second remote apparatus, said programmable display comprising:
a display section that displays a screen; and
a control device that permits, for each of the plurality of remote apparatuses, a connection in a synchronous mode or a connection in an asynchronous mode,
the synchronous mode being a mode in which at least one of the plurality of remote apparatuses displays a synchronous screen which is at least partially synchronized with a display screen displayed on the display section,
the asynchronous mode being a mode in which at least one of the plurality of remote apparatuses is permitted to display a screen different from the synchronous screen, and
in a first case in which a connection of the first remote apparatus in the synchronous mode is permitted and a connection of the second remote apparatus in the asynchronous mode is permitted, and in a state in which the second remote apparatus displays a screen including content that is at least partially identical with that of the display screen, the control device prohibiting an operation on an identical-content region of a screen displayed on each of first remaining apparatuses which are not a first operated apparatus whose screen is being operated among the programmable display, the first remote apparatus, and the second remote apparatus, the identical-content region having content identical with that of the screen displayed on the first operated apparatus.

2. The programmable display as set forth in claim 1, wherein:
in a second case in which a connection of the first remote apparatus in the asynchronous mode is permitted and a connection of the second remote apparatus in the asynchronous mode is permitted, and in a state in which the first remote apparatus displays a screen including content that is at least partially identical with that of a screen displayed on the second remote apparatus, the control device prohibits an operation on an identical-content region of a screen displayed on a second remaining apparatus which is not a second operated apparatus whose screen is being operated among the first remote apparatus and the second remote apparatus, the identical-content region having content identical with that of the screen displayed on the second operated apparatus.

3. The programmable display as set forth in claim 1, wherein:
the plurality of remote apparatuses further include a third remote apparatus; and
in a third case in which a connection of the first remote apparatus in the synchronous mode is permitted, a connection of the second remote apparatus in the asynchronous mode is permitted, and a connection of the third remote apparatus in the asynchronous mode is permitted, and in a state in which the second remote apparatus displays a screen including content that is at least partially identical with that of a screen displayed on the third remote apparatus, the control device prohibits an operation on an identical-content region of a screen displayed on a third remaining apparatus which is not a third operated apparatus whose screen is being operated among the programmable display and the first remote apparatus, the identical-content region having content identical with that of the screen displayed on the third operated apparatus, and prohibits an operation on an identical-content region of a screen displayed on a fourth remaining apparatus which is not a fourth operated apparatus whose screen is being operated among the second remote apparatus and the third remote apparatus, the identical-content region having content identical with that of the screen displayed on the fourth operated apparatus.

4. The programmable display as set forth in claim 1, wherein:
in the first case, and in a state in which the second remote apparatus displays a screen including content that is at least partially identical with that of the display screen, the control device causes operation information to be displayed on the screen displayed on each of the first remaining apparatuses, the operation information indicating content pertaining to an operation on the screen displayed on the first operated apparatus.

5. The programmable display as set forth in claim 4, wherein:
the control device determines whether or not an operation on the screen displayed on the first operated apparatus is an effective operation; and
in the first case, and in a state in which the second remote apparatus displays a screen including content that is at least partially identical with that of the display screen, when the control device has determined that the operation on the screen displayed on the first operated apparatus is an effective operation, the control device causes the operation information to be displayed on the screen displayed on each of the first remaining apparatuses, and when the control device has determined that the operation on the screen displayed on the first operated apparatus is an ineffective operation, the control device does not cause the operation information to be displayed on the screen displayed on each of the first remaining apparatuses.

6. The programmable display as set forth in claim 1, wherein:
the screen displayed on each of the first remaining apparatuses is a screen that defines a composite image composed of a plurality of layer images which overlap with each other; and
the identical-content region is a region that defines one or some of the plurality of layer images included in the composite image.

7. The programmable display as set forth in claim 6, wherein:
in the first case, and in a state in which the second remote apparatus displays a screen including content that is at least partially identical with that of the display screen, the control device sets, for the screen displayed on each of the first remaining apparatuses, a layer image which is not a layer image defined by the identical-content region among the plurality of layer images to be an image displaying operation information that indicates content pertaining to an operation on the screen displayed on the first operated apparatus.

8. The programmable display as set forth in claim 6, wherein:
in the first case, and in a state in which the second remote apparatus displays a screen including content that is at least partially identical with that of the display screen, for the screen displayed on the first remote apparatus, the control device sets one or some of the plurality of layer images to be images displayed in a first display format, and for the screen displayed on the second remote apparatus, the control device sets one or some of the plurality of layer images to be images displayed in a second display format different from the first display format.

9. A screen synchronization system, comprising:
a programmable display recited in any one of claims 1 through 8; and
the plurality of remote apparatuses.

10. A screen synchronization method for synchronizing screens using a programmable display that is connectable to a plurality of remote apparatuses including a first remote apparatus and a second remote apparatus, said screen synchronization method comprising:
a display step of displaying a screen on a display section of the programmable display; and
a connection step of permitting, for each of the plurality of remote apparatuses, a connection in a synchronous mode or a connection in an asynchronous mode,
the synchronous mode being a mode in which at least one of the plurality of remote apparatuses displays a synchronous screen which is at least partially synchronized with a display screen displayed on the display section,
the asynchronous mode being a mode in which at least one of the plurality of remote apparatuses is permitted to display a screen different from the synchronous screen, and
said screen synchronization method further comprising a prohibition step of, in a case in which a connection of the first remote apparatus in the synchronous mode is permitted and a connection of the second remote apparatus in the asynchronous mode is permitted, and in a state in which the second remote apparatus displays a screen including content that is at least partially identical with that of the display screen, prohibiting an operation on an identical-content region of a screen displayed on each of remaining apparatuses which are not an operated apparatus whose screen is being operated among the programmable display, the first remote apparatus, and the second remote apparatus, the identical-content region having content identical with that of the screen displayed on the operated apparatus.
